Europäisches Patentamt

European Patent Office

Office européen des brevets

(11) Publication number: **0 219 983**
**A1**

## (12) EUROPEAN PATENT APPLICATION

(21) Application number: 86307322.7

(22) Date of filing: 24.09.86

(51) Int. Cl.⁴: **F16K 31/42** , F16K 7/14

(30) Priority: 30.09.85 US 781530

(43) Date of publication of application:
**29.04.87 Bulletin 87/18**

(84) Designated Contracting States:
**DE FR GB IT**

(71) Applicant: CRATHERN ENGINEERING, INC.
AT Rtes, 127 & I-89 P.O. Box 187
Contoocook New Hampshire(US)

(72) Inventor: Mims, John D.
RR 1, Box 250B Bradford
New Hampshire 03221(US)
Inventor: Porat, Thomas
Rte 77
Weare New Hampshire 03281(US)

(74) Representative: Kerr, Simonne June et al
European Patent Attorney POTTS, KERR &
CO. 13 High Street
Windsor Berkshire SL4 1LD(GB)

(54) Valve control system.

(57) A valve control system for use in a laminating system which comprises a reservoir (56) for hydraulic fluid, means (50, 52) for selectively presurizing the fluid, at least one hydraulic cylinder (44) mounted for moving a frame (20) in a predetermined direction in response to the pressurized fluid being supplied to one of two inputs (43, 45) of the cylinder (44) and moving the frame (20) in a direction opposite to the predetermined direction in response to the pressurized fluid being supplied to the other of the inputs, the system including at least one control valve system and a manifold (72) comprising a passageway (92, 98, 94, 74) extending therethrough for transmitting the fluid between the reservoir (56) and one input (43 or 45) of the cylinder (44), the manifold (72) including a valve seat (96) disposed in the passageway (92, 98, 94, 74) being characterized in that a control mechanism (80) is coupled to the manifold (72) for controlling the flow of fluid through the passageway (92, 98, 94, 74), the control mechanism comprising a valve closure device (112, 114, 76) for selectively engaging and disengaging the valve seat (96) so as to open and close the passageway (92, 98, 94, 74), the valve closure device (112, 114, 76) comprising a shaft (114) axially movable relative to the valve seat (96) between a first position wherein the shaft (114) is moved axially towards the valve seat (96) so as to close the passageway (92, 98, 94, 74) at the valve seat (96) and a second position wherein the shaft (114) is moved axially away from the valve seat (96) and an actuating mechanism (110, 116) for selectively moving the shaft (114) between the first and second positions, the actuating mechanism comprising a flexible diaphragm (110) coupled to the shaft (114), means -(116a) for selectively creating a first differential pressure on opposite sides of the diaphragm (110) so as to move the shaft (114) to the first position and means (116b) for creating a second differential pressure, of an opposite type of the first differential pressure, on opposite sides of the diaphragm (110) so as to move the shaft (114) to the second position.

## VALVE CONTROL SYSTEM

The present invention relates generally to valves and, more particularly, to a valve control system including at least one valve having relatively fast opening and closing response times.

Various apparatus controlled by hydraulic or pnuematic systems (including control valves which are opened and closed so as to control the operation of the system) may function well at certain relatively slow speeds. But as the speed of operation increases the response times of the control valves can become critical. One such apparatus is the "spotter" which forms a part of the alignment and laminating system of the type manufactured and sold by Crathern Engineering Company of Contoocook, New Hampshire, or described in U.S. Patent Nos. 3400031; 3522129; 4336094 and 4345960. Such alignment and laminating systems each typically includes a conveyor belt for bringing a cover sheet (such as the cover sheet of a book case, album jacket, board game etc.), adhesive side up, into a position for the laminating operation. The spotter includes a carriage or articulating frame adapted to move and pick up a cardboard or other type of backing sheet member and then move the backing sheet member into registration with the cover sheet. The articulating frame then lowers the backing sheet member into contact with the adhesive side of the cover sheet. Movement of the articulating frame is controlled by selectively providing hydraulic fluid through a plurality of control valves to hydraulic cylinders mounted on the articulating frame (one cylinder being provided for each degree of movement) so as to selectively provide movement of the articulating frame in the desired direction or directions at the appropriate times. Subsequent folding of the edges of the cover sheet around the backing sheet members is accomplished with a separate device which forms part of the alignment and laminating system. It is extremely important that the registration of the backing sheet member with the cover sheet be accomplished within very close tolerances. Otherwise, the resulting lamininated product may be unacceptable for the end user. For example, if the cover sheet of an expensive hardbound book is slightly off registration with the backing sheet members, the book may be practically worthless to the publisher. The Crathern alignment and laminating system operates well at relatively slow speeds, typically up to thirty laminating operations per minute, providing typical maximum registration errors within 1/32nd of an inch. However, increasing the speed at which the machine operates can increase registration errors between the backing sheet member and the cover sheet primarily due to the relative slowness and variations in the actuation time of the hydraulic system. Such slowness and variations in the actuation time result in position inaccuracies of the articulating frame position prior to the lamination step.

Many of these inaccuracies at relatively faster speeds are directly attributable to the response times of the control valves used in the hydraulic system. Prior to the present invention, the spotter of the Crathern alignment and laminating system utilized control valves of the type manufactured by Skinner Precision Industries, Inc. of New Britain, Connecticut, under the trade designation of the "V5-X5 Two Way Valve". Each of these valves includes a plunger and a sleeve assembly disposed within an energization coil and engaging a valve seat so as to close off the valve passageway when the valve is closed. The passageway is coupled between a pressurized reservoir and a hydraulic cylinder positioned for moving the articulating frame of the spotter. To open the valve, the coil is energized causing the plunger and sleeve assembly to move away from the valve seat, compressing a return spring, so as to open the passageway and allow the pressurized fluid to flow therethrough. To close the valve, the coil is deenergized to allow the compressed spring to return the plunger and sleeve assembly so that the plunger and sleeve assembly engages the valve seat.

The opening and closing response times of each of these Skinner valves are each typically about 30 milliseconds with large time variations, in the order to three or four milliseconds, sometimes occurring. This is unacceptable when operating a system such as the spotter of the Crathern alignment and laminating machine at relatively fast speeds. Other valves are disclosed in U.S. Patent Nos. 2887294; 3034761; 3422850; 3447773; 3740019; 3873060; 3874630; 4091348; and 4200122. However, the valves disclosed in these patents are also undesirable since some use compressible return springs (such as those valves shown in U.S. Patent Nos. 3034761; 3422850; 3447773; 3873060; 3874630; 4091348; and 4200122); one uses a rod responsive to magnetic flux, the rod securing a ball in a valve seat in the absence of magnetic flux and gradually releases the ball to allow the flow of gas with increasing magnetic flux applied to the rod (see U.S. Patent No. 2887294); and another uses an armature directly connected to a diaphragm for moving the diaphragm into and out of contact with a valve seat in response to magnetic flux applied to the armature (see U.S. Patent No. 3740019).

Accordingly, it is a general object of the present invention to reduce or overcome the above-noted problems of the prior art.

A more specific object of the present invention is to provide a valve control system providing faster and more reliable response times than provided by the systems employing the Skinner valves described above.

Another specific object of the present invention is to provide an improved valve control system of the type adapted to be used in an apparatus such as the Crathern alignment and laminating system so as to improve the performance of the latter.

And another specific object of the present invention is to provide an improved valve control system utilizing commercially available parts.

Yet another object of the present invention is to provide an improved spotter of the type used in the Crathern alignment and laminating system.

These and other objects are achieved by an improved valve control system for controlling the flow of a pressurized fluid between a reservoir of the fluid and a device adapted to receive the fluid, the system comprising, in combination:

manifold means comprising a passageway extending through the manifold means for transmitting the fluid between the reservoir and the device, the manifold means including a valve seat disposed in the passageway; and

control means coupled to the manifold means for controlling the flow of fluid through the passageway of the manifold, the control means comprising (a) valve closure means for selectively engaging and disengaging the valve seat so as to open and close the passageway, the valve closure means comprising a shaft axially movable relative to the valve seat between a first position, wherein the shaft is moved axially toward the valve seat so as to close the passageway at the valve seat and a second position, wherein the shaft is moved axially away from the valve seat so as to open the passageway at the valve seat, and (b) actuating means for selectively moving the shaft between the first and second positions, the actuating means comprising a flexible diaphragm coupled to the shaft; means for selectively creating a first differential pressure on opposite sides of the diaphragm so as to move the shaft to the first position, and means for creating a second differential pressure of an opposite type to the first differential pressure on opposite sides of the diaphragm so as to move the shaft to the second position.

Other objects of the invention will in part be obvious and will in part appear hereinafter. The invention accordingly comprises the apparatus possessing the construction, combination of elements, and arrangement of parts which are exemplified in the following detailed disclosure, and the scope of the application of which will be indicated in the claims.

For a fuller understanding of the nature and objects of the present invention, reference should be had to the following detailed description taken in connection with the accompanying drawings, wherein:

FIG. 1 is a schematic representation of a part of a hydraulic system incorporating the valve control system of the present invention and used in a spotter of a alignment and laminating system;

FIG. 2 is a side view, partially cut away, of the preferred embodiment of the valve control system of the present invention shown in an open position;

FIG. 3 is a side view, partially cut away of the valve control system of FIG. 2, shown in a closed position;

FIG. 4 is a front view, partially cut away, of the manifold of the valve control system of FIG. 2 taken along section line 4-4 of FIG. 2; and

FIG. 5 is a front view of the actuator means for selectively opening and closing the valve of the valve control system of FIG. 2.

In the drawings, the same numerals are used to refer to the same or similar parts.

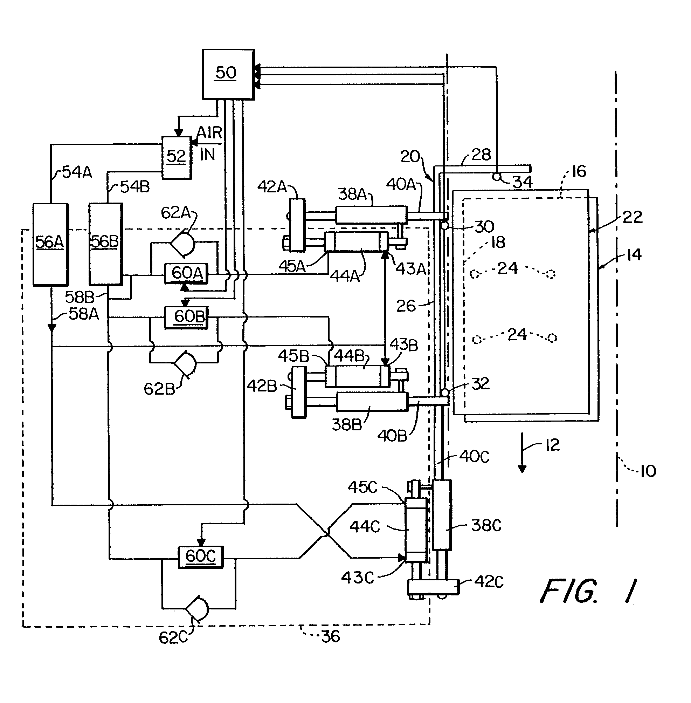

Referring to the drawings, and in particular, FIG. 1, the ·portion of the hydraulic system shown is of the type used in an alignment and laminating system of the type described in U.S. Patent Nos. 3400031, 3,522129; 4336094 and 4,345,960, except that the hydraulic system has been modified to include the present invention. Generally, the alignment and laminating system includes conveyor belt 10, adapted to move in the direction 12. The belt 10 carries a sheet of material 14, i.e., a wrapper, having an adhesive coated side positioned up, and one edge 16 oriented substantially perpendicular to and another edge 18 substantially parallel to the direction 12. The sheet 14 is moved to a position just below a carriage or articulating frame 20 adapted to carry one or more backing sheet members. The belt is preferably intermittently stopped so that (1) each sheet 14 can be held stationary relative to the articulating frame 20, and (2) the backing sheet member 22 can be properly aligned with the secured to respective portions of the sheet 14 so as to provide a laminate. Each laminate may by subsequently transferred by belt 10 from the alignment and laminating system to apparatus for wrapping the edge of each sheet 14 around the corresponding eges of the backing sheet member 22, as described in U.S. patent No. 4,336,094.

Although not shown, the alignment and laminating system generally includes a supply station including a supply try for supporting a supply of backing sheet members 22 on one side of the belt 10. A lifting or pick-up assembly is provided for raising at least a portion of each support member from its respective position on the tray. The alignment and laminating system also includes a transport assembly for transporting each backing sheet member. Means, including the articulating frame 20, are provided (1) for registering each backing sheet member (with one another when two or more sheet members are secured to a single sheet 14 and) to the adhesive coated side of the sheet 14 positioned on the belt 10 below, and (2) for moving the sheet members into contact with the sheet 14. A pick-up assembly lifts each sheet member from the supply tray and transfers it to a transport assembly, which in turn moves the sheets into the articulating frame 20.

The articulating frame 20 includes suction cups (indicated by the dotted circles 24 in FIG. 1) adapted to hold each backing member 22 during the alignment and laminating process performed by the frame 20. Frame 20 comprises a first frame section 26 and an L-shaped second frame section 28. The articulating frame also includes plunger bar (not shown) for lowing each sheet member 22 into contact with the sheet 14. As described in greater detail in U.S. Patent No. 4,335,094, the entire frame 20 is adapted to move in response to the timing sequence of the entire system, in either one of two directions in a plane parallel to the belt 10.

As described in U.S. Patent No. 4,336,094, the transport assembly moves each of the members 22 into a position within the articulating frame 20, whereupon a vacuum is applied through the cups 24 to hold the members as the transport assembly is moved back towards the supply station.

The articulating frame 20 is also provided with a three light source-light detector units 30, 32 and 34. Units 30 and 32 are suitably secured at spaced-apart locations to the frame sections 26, while the unit 34 extends from the frame section 28 over the belt 10. The units 30, 32 and 34 are identical to those described in U.S. Patent Nos. 3400,031 and 3,522,129. As schematically shown in those patents, each unit generally provides a beam of light directed down onto the belt 10. The beam is directed at the belt at an angle of incidence such that the corresponding detector of the unit is positioned to receive reflected light where the beam strikes the belt. The belt 10 is made of a light absorptive material and the sheet 14 is made of a more reflective material than the belt. The threshold of each detector of each unit 30, 32 and 34 is set so that insufficient light (below the detector threshold) is reflected to the detector when the entire light beam strikes the belt below, while sufficient light (above the threshold of the detector) will be reflected to the detector when the beam strikes a portion (i.e., the edge) of the sheet 14. As described in U.S. patent Nos. 3,522,129 and 4,336,094, the system is operated to move the entire frame 20 in a plane parallel to the belt in a direction perpendicular to the direction of travel of the belt until units 30 and 32 detect edge 18 of the sheet 14 positioned on the belt below. The system is then operated to move the entire assembly 20 in a plane parallel to the belt 12, until unit 34 detects edge 16 of the sheet positioned below.

Once alignment with both eges are made, a cable system is used to lower the plunger bar, as well as the members 18, held by cups 24 so that the members are brought into contact with the adhesive side of the sheet 14.

In order to move the frame 20 in a plane parallel to the belt during the alignment procedures, the frame 20 is suitably coupled and responsive to the hydraulic system 36. The coupling includes fixed bearing members 38A, 38B and 38C, preferably in the form of linear bushings. Each member includes a rod 40, having one end attached to the frame 20, wherein rod 40A is pivotally secured to the frame section 26 adjacent unit 30, rod 40B is pivotally secured to the frame section 26 adjacent unit 32 and rod 40C is axially aligned with and attached to the frame section 26. The other end of rods 40A, 40B, and 40C are respectively secured to the coupling blocks 42A, 42B and 42C.

The preferred hydraulic system 36 includes three hydraulic cylinders 44a, 44B and 44C, respectively secured to the bearing members 38A, 38B and 38C and supports 42A, 42B and 42C for moving the rods 40A, 40B and 40C, each in their axial direction, in response to hydraulic fluid flowing to and from the cylinders 44A, 44B and 44C, respectively. Movement of each of the rods 40A, 40B and 40C, so as to move the frame 20, is accomplished by the introduction of a pressurized hydraulic fluid to one of the inlets 43 or 45 of each of the cylinders 44A, 44B and 44C.

The means for introducing pressurized fluid into the hydraulic cylinders includes the electrical controls 50, connected to separately receive signals from the units 30, 32 and 34 so that the appropriate control signals are provided to the hydraulic system 36. Controls 50 includes an output to an air valve 52. The latter receives pressurized air from a source (not shown), typically at a pressure in the order of 80 psi, and selectively provides pressurized air over either conduit 54A or conduit 54B to the respective reservoir tank 56A or tank 56B, depending upon the position of the air valve. Tanks 56A and 56B contain a hydraulic fluid, such as oil. The output of tank 56A is connected through the hydraulic line 58A to the inlets 43 of the hydraulic cylinders 44A, 44B and 44C for retracting the rods 40A, 40B and 40C to retract the articulating frame 20. The output of tank 56B is connected through the hydraulic line 58B to the control valves 60A, 60B and 60C, which in turn are respectively in fluid communication with inlets 45 for moving the frame 20 during the alignment procedure.

In the prior art Crathern alignment and laminating system, the opening and closing response times of each control valve 60 was typically about 30 milliseconds with large time variations (typically 3 to 4 milliseconds) sometimes occurring. This is unacceptable when moving the frame 20 at relatively fast speeds relative to the cover sheet, since the slow response time and large time variations can mean over or under travel of the articulating frame relative to the cover sheet, and thus misregistration of the backing sheet member and cover sheets.

According to the present invention, an improved control valve system 60, together with corresponding check valves 62, is substituted for each prior art control valve to provide faster and more reliable response times than the prior art system.

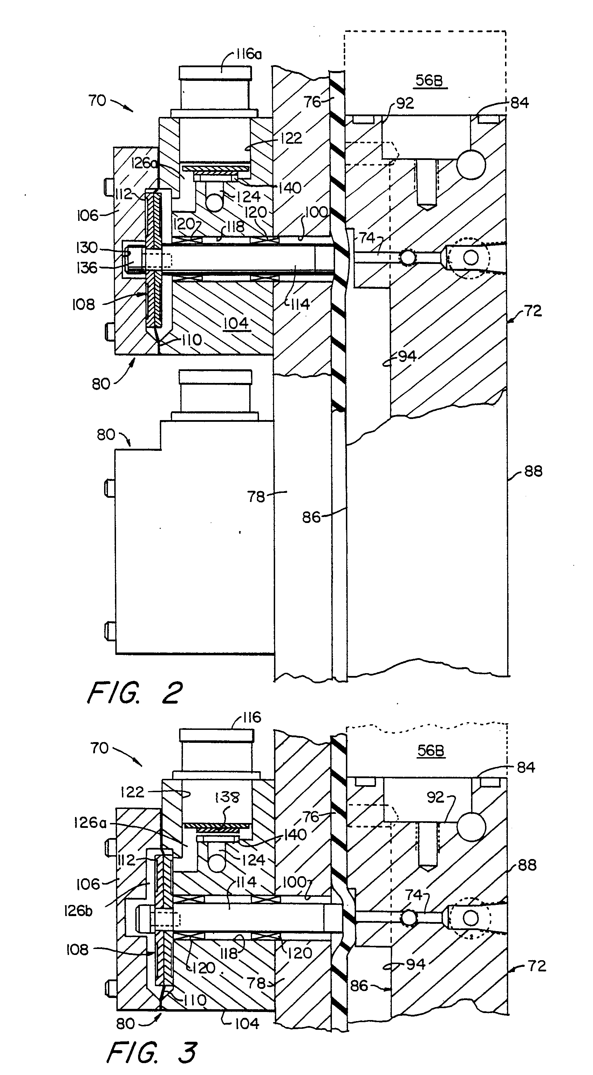

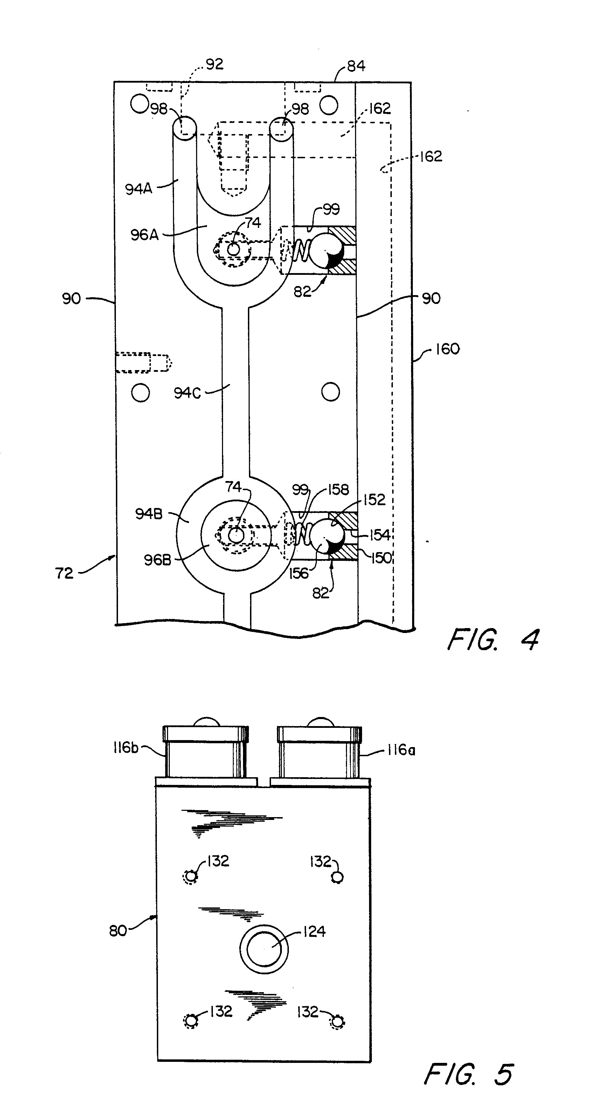

The preferred embodiment of the valve control system, generally referred to at 70 in Figs. 2 and 3, is adapted to control the flow of a pressurized hydraulic fluid between tank 56B, in the from of a reservoir, as shown in Figs. 2-4, and the inlet 45 of one of the hydraulic cylinders 44. The preferred embodiment of the system 70 generally comprises (a) a manifold section 72 (including at least one, and preferably a plurality of passageways 74 for transmitting the hydraulic fluid between the tank 56B and one or more of the cylinders 44, (b) a diaphragm 76, (c) a cover plate 78 (d) a valve control mechanism 80 for controlling the flow of fluid through each passageway 74, and (e) a check valve assembly 82 (shown in FIG. 4, and - schematically at 62 in Fig. 1).

The tank 56B contains fluid, such as oil, as previously described is adapted to be pressurized at a relatively high pressure, e.g. 80 psi. when air valve 52 is appropriately positioned. The tank 56B is preferably secured to the manifold section 72 such that the pressure of the hydraulic fluid in the reservoir is maintained in each of the passageways 74.

The manifold section 72 is shown as a rectangular block, with its elongated direction adapted to be oriented in a vertical direction. The manifold section has a top 84 for supporting the tank 56B, a front surface 86, a rear surface 88 and side surfaces 90. The top 84 includes a well 92 for receiving hydraulic fluid from the tank 56B. The front surface 86 is provided with a patterned groove 94 (shown in FIG. 4), which together with the diaphragm 76 forms a commom chamber for the hydraulic fluid for all of the passageways 74.

The patterned groove 94 is designed to allow air to rise in the groove toward the tank 56B so as to minimize air traps for any air which may be present in the hydraulic fluid. As best shown in FIG. 4, the groove pattern preferably includes the top U-shaped portion 94A associated with the top passageway 74 and an O-shaped portion 94B disposed directly beneath the U-shaped portion 94A for each passageway 74 disposed below the top passageway. A connecting groove portion 94C extends in a vertical direction through the geometric center of each portion 94A and 94B between adjacent portions 94A and 94B and between adjacent portions 94B. The grooves of all of the groove portions 94A, 94B and 94C are of equal width and depth so that the pressure and flow of the fluid are maintained at a constant level throughout the hydraulic system.

The bottom of the U-shaped portion 94A and the center of each O-shaped portion 94B is recessed so as to form valve seats 96A and 96B, each of which circumscribes a respective opening to a passageway 74. A pair of passageways 98 extend between the well 92 and the respective upper parts of the U-shaped portion 94A so that fluid can be transferred between tank 56B and the respective cylinder 44, through passageways 98, the channels formed by the groove portions 94 and the diaphragm 76, over each valve seat 96 and through passageway 74. A by-pass passageway 99, containing a check valve assembly 82, is through a side surface 90 of the manifold section 72 to each passageway 74.

The diaphragm 76 is made of a single sheet of flexible, resilient material, such as nitrile, which covers the entire groove 94 and is suitably secured to the manifold section 72 with cover plate 78.

The cover plate 78 comprises an aperture 100 disposed substantially coaxially with each passageway 74 at the corresponding valve seat 94.

A valve control mechanism 80 is provided for each valve seat 96 and associated passageway 74 so that a separate mechanism selectively can control the flow of fluid through the respectice passageway. Each valve control mechanism 80 is preferably a commercially available, vacuum activated, linear actuator of a type including a flexible diaphragm. The diaphragm responds to differential pressures to quickly move an actuator piston to and away from the valve seat to open and close the opening to the passageway on the respective valve seat. Each mechanism 80 is secured to the cover plate in any suitable manner.

More particularly, as shown in FIGS. 2, 3 and 5, each valve control mechanism 80 comprises a housing 104; a cover 106 secured to the housing 104; a piston assembly 108, including a diaphragm 110, disc 112 and piston 114; and a pair of electrically-operated solenoid valve units 116 (only one being shown in FIGS. 2 and 3, while both are shown as 116a and 116b in FIG. 5) for controlling the application of a differential pressure on opposite sides of the diaphragm 110. The housing 104 includes a central aperture 118, aligned with the aperture 100 of the cover plate 78. Bearings 120 are disposed in the central aperture 118 for supporting the piston 114 so that the latter freely can move axially toward and away from the diaphragm 76, as will be described in greater detail hereinafter. The top of each housing 104 includes a pair of cavities 122, one associated with each solenoid valve unit 116 (with only one cavity being shown in FIG. 2, the second cavity being positioned behind, and completely separate, from the cavity shown in that FIG.). The bottom of each cavity 122 is provided with a section of a first passageway 124 disposed approximately in the center of the corresponding cavity 122, communicating with a vacuum source (not shown). Each cavity 122 is also provided with an opening to a second passageway 126A or 126B. The opposite end of one of the passageways 126A is connected through housing 104 to one side of the diaphragm 110 and disc 112, as shown in FIG. 2, while the opposite end of the other passageway 126B is connected through housing 104 to the other side of the diaphragm and disc, as shown in part in FIGS. 2 and 3.

The housing 104 and cover 106 are suitably formed to provide the chamber, including the center cavity 130 in the cover 106, dimensioned so that sufficient room is provided for the disc 112 to move axially with the piston 114 in either direction in response to differential pressures. The cover 106 is secured to the housing 104 in any suitable manner, such as with screws 132, so as to securely clamp the diaphragm 110 between the housing 104 and cover 106.

The disc 112 of the assembly 108 includes two disc sections, tightly secured together with the diaphragm 10 clamped therebetween, and coaxially mounted on the piston 114 with the screw 136. The latter is adapted to slide in the cavity 130.

The two electrically-operated solenoids units 116a and 116b, responsive to a spiked DC signal, are provided for selectively applying the vacuum, from one of the supply passageways 124 to the corresponding passageway 126 to one of the sides of the diaphragm 110, while the other side of the diaphragm remains at atmospheric pressure. With such a differential pressure created, a uniform force is applied to the disc 112 and diaphragm 110, moving the disc and diaphragm, along with the piston 114 in an axial direction. Each solenoid unit includes a disc 138 movable within an electrical coil such that the disc moves into contact with a sealing ring 140 disposed at the bottom of the respective cavity 122 when the respective coil is deenergized and allows air to enter the corresponding passageway 126 and disengages the ring when the respective coil is energized so that a vacuum is applied to the passageway 126.

Check valve assembly 82 (shown in FIG. 4) includes a seating element 150 including the spherical seat 152, and center aperture 154 communicating with opposite side of the by-pass passageway 98. A spherical ball 156 is disposed in the passageway 98 between the seat 152 and the passageway 74, and biased against the seat 152 by spring 158. A plate 160 is secured to the side surface 88 of the manifold section so that a passageway 162 is provided for fluid exiting the tank 56B when the tank 56B is pressurized and the check valve assembly is open. Passageaway 162 is connected to each passageway 98 through the side surface 88 to the well 90 as best shown in FIG. 4.

In operation, air valve 52 is activated so that tank 56A is pressurized and tank 56B is depressurized prior to the movement of articulating frame 20. Controls 50 operate each valve 60 so as to selectively provide hydraulic fluid to each inlet 45 of the corresponding cylinder 44. The appropriate valve 60 is therefore open by energizing the solenoid unit 116B. This results in the disc 130 of the solenoid unit 116A from disengaging sealing ring 140 so that the vacuum is applied through passageway 126B to the left side of the disc 112, as shown in FIG. 2. This results in the piston 114 moving to the right to the position shown in FIG. 2, so that the portion of diaphragm 76 disengages the seat 94A and allows the pressurized fluid to flow. In particular, pressurized fluid flows from tank 56A to the corresponding cylinder for which the respective valve 60 has been open. Fluid will flow from the cylinder to the passageway 74, around seat 96, through grooves 94, through passageway 98 to the tank 56B. This will cause the appropriate rod 40 to extend until the corresponding unit 30, 32 and 34 detects the appropriate edge of the sheet 14 on the belt 10 below. It will be appreciated that as the hydraulic fluid flows in this direction, i.e, toward the tank 56B, the hydraulic fluid entering the passageway 74 will force the ball 154 against the seat 152, preventing fluid from entering passage 162.

Each valve remains open until the corresponding unit 30, 32 and 34 locates the appropriate edge 16 and 18 of the sheet 14. It is then desirable to close the valve. Accordingly, the solenoid unit 116B is deenergized, causing rod 138 of unit 116b to move into engagement with the seal 140 and allow air to enter the passageway 116B. The solenoid unit 116A is energized. This results in the rod 138 of the solenoid unit 116B from disengaging sealing ring 140, so that the vacuum is applied through passageway 126A to the right side of the disc 112, as shown in FIG. 3. This results in the pistion 114 moving to the left to the position shown in FIG. 3, so that the portion of diaphragm 76 engages the seat 96A and prevents the flow of pressurized fluid from flowing.

When it is desirable to retract the frame 20, air valve 52 is operated so that air pressure is withdrawn form tank 56A and provided to tank 56B. This results in the flow of hydraulic fluid flowing into the inlets 43 of each cylinder 44. This in turn causes fluid to flow out of tank 56B through well 92, through passageway 162, through the check valve assembly 82, through the rear portion of passageway 74 to the respective inlet 45 of the corresponding cylinder.

The foregoing, therefore, provides an improved valve control system, particularly useful in a system such as the spotter shown in FIG. 1. The new valve control system provides faster and more reliable opening and closing response time. For example, typical response times of each valve 60 is 10 milliseconds with typical variations of less that 1 millisecond. Typical speeds of the alignment and laminating system are fifty or sixty laminating operations per minute, with better tolerances often being provided.

## Claims

1. A valve control system for controlling the flow of a pressurized fluid between a fluid reservoir and a device adapted to receive the fluid, comprising a manifold (72) having a passageway (92, 98, 94, 74) extending therethrough for transmitting the fluid between the reservoir (56) and the device - (44), the manifold (72) including a valve seat (96) disposed in the passageway (92, 98, 94, 74), characterized in that a control mechanism (80) is coupled to the manifold (72) for controlling the flow of fluid through the passageway (92, 98, 94, 74), the control mechanism comprising a valve closure device (112, 114, 76) for selectively engaging and disengaging the valve seat (96) so as to open and close the passageway (92, 98, 94, 74), the valve closure device (112, 114, 76) comprising a shaft - (114) axially movable relative to the valve seat (96) between a first position wherein the shaft (114) is moved axially toward the valve seat (96) so as to close the passageway (92, 98, 94, 74) at the valve seat (96) and a second position wherein the shaft - (114) is moved axially away from the valve seat - (96) so as to open the passageway (92, 98, 94, 74) at the valve seat (96) and an actuating mechanism (110, 116) for selectively moving the shaft (114) between the first and second positions, the actuating mechanism comprising a flexible diaphragm - (1100 coupled to the shaft (114), means (116a) for selectively creating a first differential pressure on opposite side of the diaphragm (110) so as to move the shaft (114) to the first position and means (116b) for creating a second differential pressure, of an opposite type to the first differential pressure, on opposite sides of the diaphragm (110) so as to move the shaft (114) to the second position.

2. A valve control system according to claim 1, characterized in that the valve closure device comprises a flexible diaphragm (76) disposed between the shaft(114) and the valve seat (96), the shaft - (114) being adapted to push the diaphragm (76) into contact with the valve seat (96) when the shaft (114) is moved to the first position so as to close the passageway (74, 94) and release the diaphragm (76) from the valve seat (96) when the shaft (114) is moved to the second position.

3. A valve system according to claim 1, characterized in that the control mechanism (80) includes means (116a, 116b) for mutually exclusively providing the first and second differential pressures on the opposite sides of the diaphragm (110).

4. A valve control system according to claim 3, characterized in that the means (116a, 116b) for mutually exclusively providing the first and second differential pressures includes means for selectively providing a low differential pressure to either side of the diaphragm (110).

5. A valve control system according to claim 4, characterized in that the means (116a, 116b ) for selectively providing a low differential pressure to either side of the diaphragm (110) includes a second passageway (126A) from a source (124) of low differential pressure to one side of the diaphragm - (110) and a third passageway (126B) from the source (124) of low differential pressure to the other side of the diaphragm (110) and means for selectively opening and closing each of the second and third passageways (126A, 126B).

6. A valve control system according to claim 5, characterized in that the means (116a, 116b) for selectively opening and closing each of the second (126A) and third (126B) passageways includes electrical means (116a, 116b).

7. A valve control system according to claim 6, characterized in that the means (116a, 116b) for selectively opening and closing each of the second and third passageways (126A, 126B) comprises a valve (116a, 116 b) disposed in the passageway and the electrical means is adapted to open and close each of the valves.

8. A valve control system according to claim 7, characterized in that the electrical means includes an electrical coil coupled at each of the valves and adapted to be electrically energized so as to open and close the respective valve.

9. A valve control system according to claim 1, characterized in that the manifold (72) includes a plurality of passageways (92, 98, 94, 74) for transmitting the fluid from the reservoir (56) and corresponding plurality of the valve seats (96) respectively disposed in the passageways.

10. A valve control system according to claim 9, characterized in that the valve closure device - (70) comprises a like plurality of actuating means - (110, 116) for respectively opening and closing the passageways (74, 92, 94, 98).

11. A valve control system according to claim 10, characterized in that the fluid is a liquid and the manifold (72) includes a fluid chamber (94), the plurality of valve seats (96) of the manifold (72) all being disposed in fluid chamber so as to minimize gas pockets therein.

12. A valve control system according to claim 11, characterized in that the valve closure device comprises a flexible diaphragm (76) disposed in the chamber (94) between each of the shafts (114) and corresponding valve seats (96), each of the shafts (114) being adapted to push the diaphragm - (76) into contact with the corresponding valve seat (96) when the shaft (114) is moved to the first position so as to close the corresponding passageway (94, 74) and release the diaphragm (76) from the corresponding valve seat (96) when the shaft - (114) is moved to the second position so as to open the corresponding passageway (94, 74).

13. A valve control system according to claim 1, characterized in that a check valve assembly - (82) is disposed in the manifold (72) for controlling the direction of pressurized fluid to and from the reservoir (56).

14. A laminating system comprising a reservoir (56) for hydraulic fluid, means (50, 52) for selectively presurizing the fluid, at least one hydraulic cylinder (44) mounted for moving a frame (20) in a predetermined direction in response to the pressurized fluid being supplied to one of two imputs (43, 45) of the cylinder (44) and moving the frame (20) in a direction opposite to the predetermined direction in response to the pressurized fluid being supplied to the other of the inputs, the system including at least one control valve system and a manifold (72) comprising a passageway (92, 98, 94, 74) extending therethrough for transmitting the fluid between the reservoir (56) and one input (43, or 45) of the cylinder (44), the manifold (72) including a valve seat (96) disposed in the passageway (92, 98, 94, 74), characterized in that a control mechanism (80) is coupled to the manifold (72) for controlling the flow of fluid through the passageway - (92, 98, 94, 74), the control mechanism comprising a valve closure device (112, 114, 76) for selectively engaging and disengaging the valve seat (96) so as to open and close the passageway (92, 98, 94, 74), the valve closure device (112, 114, 76) comprising a shaft (114) axially movable relative to the valve seat (96) between a first position wherein the shaft (114) is moved axially towards the valve seat (96) so as to close the passageway (92, 98, 94, 74) at the valve seat (96) and a second position wherein the shaft (114) is moved axially away from the valve seat (96) and an actuating mechanism (110, 116) for selectively moving the shaft (114) between the first and second positions, the actuating mechanism comprising a flexible diaphragm (110) coupled to the shaft (114), means (116a) for selectively creating a first differential pressure on opposite sides of the diaphragm (110) so as to move the shaft (114) to the first position and means - (116b) for creating a second differential pressure, of an opposite type to the first differential pressure, on opposite sides of the diaphragm (110) so as to move the shaft (114) to the second position.

15. A laminating system according to claim 14, characterized in that the valve closure device comprises a flexible diaphragm (76) disposed between the shaft (114) and the valve seat (96), the shaft - (114) being adapted to push the diaphragm (76) into contact with the valve seat (96) when the shaft (114) is moved to the first position so as to close the passageway (74, 94) and release the diaphragm (76) from the valve seat (96) when the shaft (114) is moved to the second position.

16. A laminating system according to claim 14, characterized in that the control mechanism (80) includes means (116a, 116b) for mutually exclusively providing the first and second differential pressures on the opposite sides of the diaphragm - (110).

17. A laminating system according to claim 16, characterized in that the means (116a , 116b) for mutually exclusively providing the first and second differential pressures includes means for selectively providing a low differential pressure to either side of the diaphragm (110).

18. A laminating system according to claim 17, characterized in that the means (116a, 116b) for selectively providing a low differential pressure to either side of the diaphragm (110) includes a second passageway (126A) from a source (124) of low differential pressure to one side of the diaphragm - (110) and a third passageway (126B) from the source (124) of low differential pressure to the other side of the diaphragm (110) and means for selectively opening and closing each of the second and third passageways (126A, 126B).

19. A laminating system according to claim 18, characterized in that the means (116a , 116b) for selectively opening and closing each of the second (126A) and third (126B) passageways includes elctrical means (116a, 116b).

20. A laminating system according to claim 19, characterized in that the means (116a, 116b) for selectively opening and closing each of the second and third passageways (126A, 126B) comprises a valve (116a, 116 b) disposed in the passageway and the electrical means is adapted to open and close each of the valves.

21. A laminating system according to claim 20, characterized in that the electrical means includes an electrical coil coupled to each of the valves and adapted to be electrically energized so as to open and close the respective valve.

22. A laminating system according to claim 14, characterized in that the manifold (72) includes a plurality of passageways (92, 98, 94, 74) for transmitting the fluid from the reservoir (56) and a corresponding plurality of valve seats (96) respectively disposed in the passageways.

23. A laminating system according to claim 22, characterized in that the valve closure device (70) comprises a life plurality of actuating means (110, 116) for respectively opening and closing the passageways (74, 92 94 and 98).

24. A laminating system according to claim 23, characterized in that the fluid is a liquid and the manifold (72) includes a fluid chamber (94), the plurality of valve seats (96) of the manifold (72) all being disposed in the fluid chamber so as to minimize gas packets therein.

25. A laminating system according to claim 24, characterized in that the valve closure device comprises a flexible diaphragm (76) disposed in the chamber (94) between each of the shafts (114) and corresponding valve seat (96), each of the shafts - (114) being adapted to push the diaphragm (76) into contact with the corresponding valve seat (96) when the shaft (114) is moved to the first position so as to close the corresponding passageway (94, 74) and release the diaphragm (76) from the corresponding valve seat (96) when the shaft (114) is moved to the second position so as to open the corresponding passageway (94, 74).

26. A laminating system according to claim 14, characterized in that a check valve assembly (82) is disposed in the manifold (72) for controlling the direction of pressurized fluid to and from the reservoir (56).

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 710 162 (SNODDY)<br>* Column 2, line 3 - column 4, line 70 * | 1,3-8 | F 16 K 31/42<br>F 16 K 7/14 |
| Y | | 14,16-21 | |
| A | US-A-3 019 815 (LENARDON)<br><br>* Column 2, line 52 - column 5, line 10 * | 1,2,9-12 | |
| Y | | 14,15,22-25 | |
| D,Y | US-A-3 400 031 (CHATHERN)<br>* Column 3, line 8 - column 5, line 48 * | 14-25 | TECHNICAL FIELDS SEARCHED (Int. Cl.4)<br><br>F 16 K |

The present search report has been drawn up for all claims

| Place of search | Date of completion of the search | Examiner |
|---|---|---|
| THE HAGUE | 17-12-1986 | VERELST P.E.J. |